# EUROPÄISCHE PATENTANMELDUNG

(11) **EP 1 531 358 A1**
(43) Veröffentlichungstag der Anmeldung: **18.05.2005**
(21) Anmeldenummer: 04026650.4
(22) Anmeldetag: 10.11.2004
(51) Int. Cl.: G03B 21/58

(54) **Rollbildwand**

(30) Priorität: 11.11.2003 DE 10352918
(71) Anmelder: DDC Design & Development GmbH & Co. KG, 33175 Bad Lippspringe (DE)
(72) Erfinder: Leipold, Frank, 91301 Forchheim (DE)
(74) Vertreter: Schober, Mirko

(57) **Zusammenfassung**

Eine Rollbildwand besitzt eine in einem Gehäuse (2) angeordnete Wickelwelle (5), eine auf die Wickelwelle(5) aufwickelbare, als Projektionsfläche dienende, flexible Warenbahn (1) und einen sich parallel zur Wickelwelle (5) über die Breite der Warenbahn (1) erstreckenden Quersteg (3). Ferner besitzt die Rollbildwand einen sich am Gehäuse (2) abstützenden Halter (4), der dazu ausgebildet ist, den Quersteg (3) bei ggf. nur teilweise abgewickelter Warenbahn (1) in einem Abstand von dem Gehäuse (2) zu fixieren. Der Halter (4) ist auf unterschiedlichen Seiten der Warenbahn (1) bzw. der Wickelwelle (5) an dem Gehäuse (2) fixierbar und die Warenbahn (1) weist auf ihren unterschiedlichen Seiten unterschiedliche Projektionsflächen (1a; 1b) auf.

## Beschreibung

Die Erfindung betrifft eine Rollbildwand nach dem Oberbegriff des Patentanspruchs 1.

Derartige Rollbildwände besitzen auf nur einer Seite der Warenbahn eine Projektionsfläche. Diese Projektionsfläche kann in unterschiedlichen Oberflächenqualitäten ausgebildet sein und eine Maske für ein bestimmtes Bildformat aufweisen oder auch ohne Bildmaske gestaltet sein. Beim Vorsehen einer Bildmaske auf der Projektionsfläche ist der Benutzer auf ein spezielles Bildformat, beispielsweise 4:3 festgelegt, wenn er die Bildwand ohne Qualitätseinbuße des Bildes benutzen will. So kann eine Rollbildwand mit einer Bildmaske im Format 4:3 zur Projektion des Breitwandformats 16:9 nur in der Weise benutzt werden, daß die Umrandung der Maske im Format 4:3 an mindestens einer horizontalen Begrenzungskante nicht paßt und deshalb an dieser nicht passenden Kante erhebliche Qualitätseinbußen des projizierten Bildes entstehen.

Um unterschiedliche Projektionsflächen für unterschiedliche Projektionsanforderungen zur Verfügung zu haben, war es deshalb bisher notwendig, zwei zueinander parallele Wickelwellen in einem Gehäuse vorzusehen und bedarfsweise die eine oder die andere Projektionsfläche auszurollen.

Ausgehend von diesem Stand der Technik liegt der Erfindung die Aufgabe zugrunde, eine Rollbildwand der als bekannt vorausgesetzten Art, also eine Rollbildwand mit nur einer abwickelbaren und aufwickelbaren Warenbahn, so auszubilden, daß sie zur Erfüllung zweier unterschiedlicher Projektionsaufgaben geeignet ist. Sie soll zwei Projektionsflächen auf unterschiedlichen Seiten der Warenbahn zur Verfügung stellen, die beide in gleicher Weise nutzbar sind.

Die Lösung dieser Aufgabe erfolgt mit den Merkmalen des Kennzeichnungsteils von Anspruch 1.

Während bisher Rollbildwände der als bekannt vorausgesetzten Art eine Projektionsoberfläche nur auf einer Seite der Warenbahn aufwiesen und einen Halter besaßen, der in fester, vorgegebener Anordnung nur auf der Rückseite der Warenbahn am Gehäuse fest angeordnet war, kann beim Anmeldungsgegenstand der Halter wahlweise zu beiden Seiten der Warenbahn bzw. der Wickelwelle am Gehäuse befestigt werden. Dies erlaubt die Ausnutzung der Frontseite und der Rückseite als Projektionsfläche.

Die unterschiedlichen Projektionsflächen können sich dadurch voneinander unterscheiden, daß sie beispielsweise unterschiedliche Oberflächenqualitäten aufweisen. Es ist auch möglich, daß die unterschiedlichen Projektionsflächen unterschiedliche Masken aufweisen.

Nachstehend wird eine bevorzugte Ausführungsform der Erfindung anhand der Zeichnung im einzelnen beschrieben. Es zeigen:
- Figur 1 -: eine perspektivische Darstellung einer Rollbildwand im ausgezogenem Zustand, wobei die vordere Projektionsfläche 1a zum Betrachter weist,
- Figur 2 -: die Rollbildwand gemäß Figur 1 in ausgezogenem Zustand, wobei die Projektionsfläche 1b zum Betrachter weist,
- Figur 3 -: die Rollbildwand im eingerollten Zustand mit einem vollständigen Halter, der in eine Aufnahme 2a eingesetzt ist und einem nur teilweise dargestellten Halter, der in eine Aufnahme 2b eingesteckt ist.

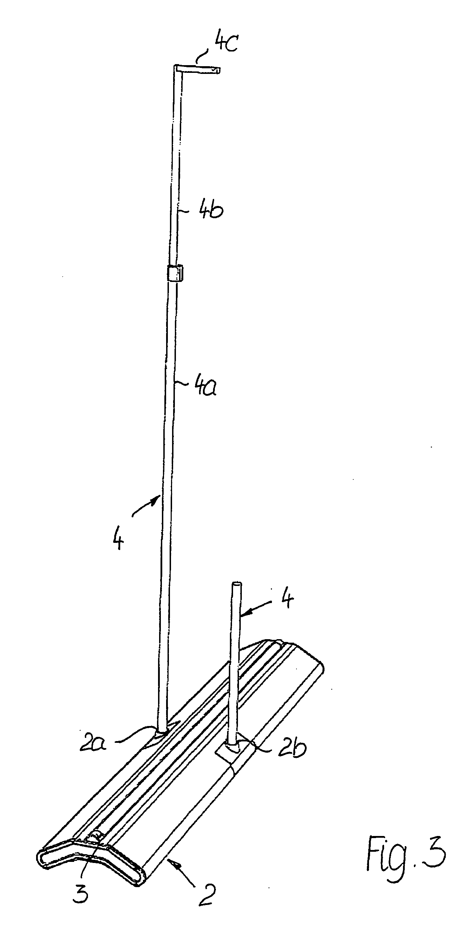

Die Darstellung gemäß Figur 3 dient dem besseren Verständnis. Im Gebrauchszustand der Rollbildwand ist der mit 4 bezeichnete Halter entweder in die Aufnahme 2a des Gehäuses 2 eingesteckt oder in die Aufnahme 2b des Gehäuses 2.

Im Gehäuse 2 ist in bekannter Weise eine Wickelwelle 5 drehbar gelagert, auf die eine Warenbahn 1 aufwickelbar ist bzw. von der diese Warenbahn 1 abwickelbar ist. Die Warenbahn 1 besitzt zwei unterschiedliche Projektionsflächen, nämlich eine Projektionsfläche 1a und eine Projektionsfläche 1b.

Am oberen Ende der Warenbahn ist ein Quersteg 3 angeordnet, der sich über die gesamte Breite der Warenbahn 1 erstreckt. Dieser Quersteg 3 ist beispielsweise als runde Stange ausgebildet. An dem Quersteg 3 ist eine Halteschlaufe 3a befestigt. Die Halteschlaufe 3a wird im ausgezogenen Zustand der Warenbahn 1 von einem am oberen Ende des Halters 4 angeordneten Arm 4c untergriffen. Der Halter 4 ist teleskopisch ausgebildet und besitzt ein Unterteil 4a sowie ein dazu verschieblich angeordnetes, jedoch am Unterteil 4a festlegbares Oberteil 4b, welches den Arm 4c trägt.

Der Halter 4 ist wahlweise in eine der beiden auf unterschiedlichen Seiten der Warenbahn 1 bzw. der Wickelwelle 5 angeordneten Aufnahmen 2a bzw. 2b einsetzbar. Die Aufnahmen 2a und 2b sind im dargestellten Ausführungsbeispiel als zu den unteren Enden des Halters 4 passende Einstecköffnungen ausgebildet.

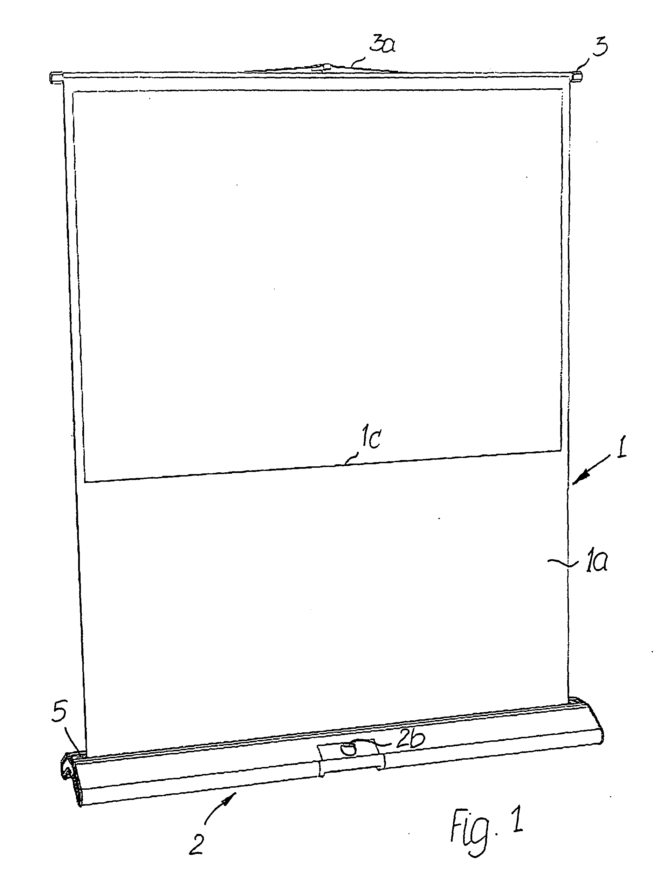

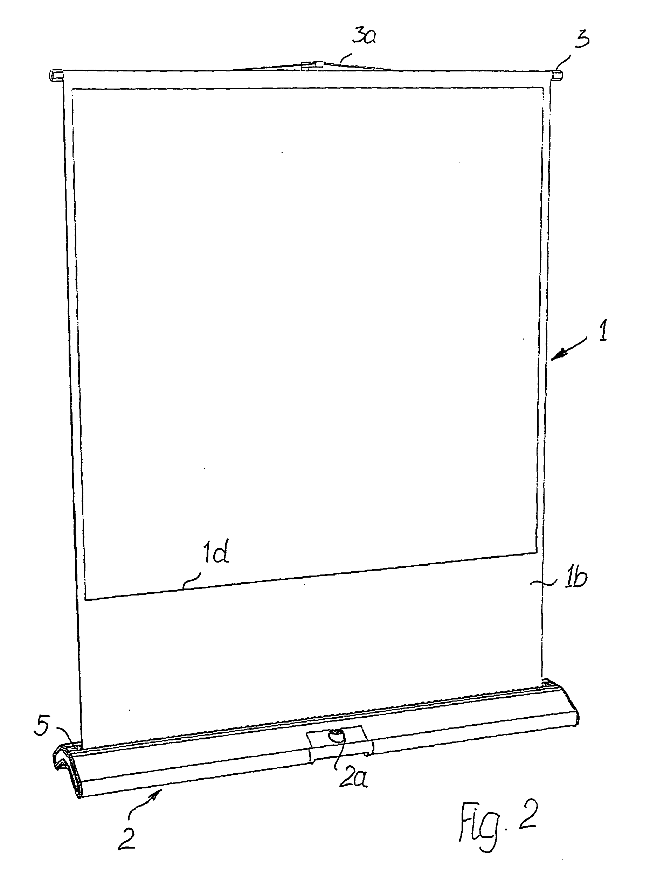

Die in Figur 1 dem Betrachter zugewandte Projektionsfläche 1a besitzt eine Maske, deren horizontale untere Randlinie mit 1c bezeichnet ist. Wenn die Projektionsfläche 1a benutzt wird, ist der Halter 4 in die Aufnahme 2a eingesteckt, während die Aufnahme 2b leer bleibt. Wird statt dessen die Projektionsfläche 1b benutzt, wie sie in Figur 2 zum Betrachter weist, bleibt die Aufnahme 2a leer, während der Halter 4 in die Aufnahme 2b eingesteckt ist.

## Patentansprüche

1. Rollbildwand mit einer in einem Gehäuse (2) angeordneten Wickelwelle (5), einer auf die Wickelwelle (5) aufwickelbaren, als Projektionsfläche dienenden, flexiblen Warenbahn (1), und mit einem sich parallel zur Wickelwelle (5) über die Breite der Warenbahn (1) erstreckenden Quersteg (3), ferner mit einem sich am Gehäuse (2) abstützenden Halter (4), der dazu ausgebildet ist, den Quersteg (3) bei ggf. nur teilweise abgewickelter Warenbahn (1) in einem Abstand von dem Gehäuse (2) zu fixieren,
**dadurch gekennzeichnet,**
**daß** der Halter (4) auf unterschiedlichen Seiten der Warenbahn (1) bzw. der Wickelwelle (5) an dem Gehäuse (2) fixierbar ist und die Warenbahn (1) auf ihren unterschiedlichen Seiten unterschiedliche Projektionsflächen (1a; 1b) aufweist.

2. Rollbildwand nach Anspruch 1,
**dadurch gekennzeichnet,**
**daß** das Gehäuse (2) auf unterschiedlichen Seiten der Warenbahn (1) bzw. der Wickelwelle (5) angeordnete Aufnahmen (2a; 2b) für das untere Ende des Halters (4) aufweist.

3. Rollbildwand nach Anspruch 2,
**dadurch gekennzeichnet,**
**daß** die Aufnahmen (2a; 2b) gleich ausgebildet sind.

4. Rollbildwand nach mindestens einem der vorangehenden Ansprüche,
**dadurch gekennzeichnet,**
**daß** die Aufnahmen (2a; 2b) als Einstecköffnungen ausgebildet sind.

5. Rollbildwand nach mindestens einem der vorangehenden Ansprüche,
**dadurch gekennzeichnet,**
**daß** die unterschiedlichen Projektionsflächen (1a; 1b) unterschiedliche Oberflächenqualitäten aufweisen.

6. Rollbildwand nach mindestens einem der vorangehenden Ansprüche,
**dadurch gekennzeichnet,**
**daß** die unterschiedlichen Projektionsflächen (1a; 1b) unterschiedliche Masken (1c; 1d) aufweisen.
